# EUROPÄISCHE PATENTANMELDUNG

(11) **EP 1 625 882 A1**
(43) Veröffentlichungstag der Anmeldung: **15.02.2006**
(21) Anmeldenummer: 05016811.1
(22) Anmeldetag: 02.08.2005
(51) Int. Cl.: B01D 46/26, B01D 45/14, B01D 50/00, A47L 9/16, A47L 9/18

(54) **Vorrichtung zur Luftreinigung**

(30) Priorität: 10.08.2004 DE 102004038719
(71) Anmelder: Neumann, Gunther, 72622 Nürtingen (DE)
(72) Erfinder: Neumann, Gunther, 72622 Nürtingen (DE)

(57) **Zusammenfassung**

Betrifft eine Vorrichtung, mit welcher Luft zur Reinigung der Raumluft oder von Oberflächen mit einem Gebläselaufrad (2) angesaugt wird, wobei der Schmutz (Staub), Teilchen aus verschiedenen Stoffen, von der Luft getrennt und zur Entsorgung zurückgehalten werden.

Das Zurückhalten erfolgt mit einer Abscheidevorrichtung, z.B. ein Wasserbad (8) und nachgeschaltet einer Feinabscheidevorrichtung mit relativ großem Differenzdruck, in der ökologisch bedenkliche schädliche Verkeimungen und Schimmelpilze entstehen. Diese muss deshalb öfters gewechselt werden um den Schaden zu begrenzen. Man verzichtet oft auf die Feinabscheidevorrichtung und nimmt Verschmutzungen der Abluft und innerhalb des Gerätes in Kauf.

Die Lösung ist ein rotierender Rotationsfilter (3) als Feinabscheidevorrichtung mit geringem Differenzdruck vor dem Gebläselaufrad (2), der infolge der Zentrifugalkraft und dessen Beschichtung selbstreinigend ist und dadurch keine Verkeimung entsteht und wartungsfrei ist.

## Beschreibung

Die Erfindung betrifft eine im Haushalt oder in Betrieben angewendete Vorrichtung, mit welcher Luft zur Reinigung der Raumluft oder von verschmutzten Oberflächen angesaugt wird, wobei der Schmutz (Staub), auch größere mit der Luft geförderte Teilchen aller Art, Partikel aus verschiedenen Stoffen, sowie Hausmilben, deren Kot, Schadstoffe wie Formaldehyd und sonstige Allergieschadstoffe, von der Luft getrennt und zur Entsorgung zurückgehalten werden.

Es ist bekannt, dass Luft mittels eines rotierenden Gebläselaufrads durch eine Abscheidevorrichtung gesaugt wird und entweder in den gleichen Raum zurückgeführt, oder in einen anderen Raum, bzw. in die Außenluft. Alternativ wird nach der Abscheidevorrichtung eine Feinabscheidevorrichtung vor oder hinter dem Gebläselaufrad angeordnet.
Beispielsweise ist die Abscheidevorrichtung ein mechanischer Filter, z.B. ein Filterbeutel, ein Wasserbad bzw. Wassernebel oder ein Zyklon.
Die Feinabscheidevorrichtung ist beispielsweise ein Mikrofilter, wie HEPA-Filter (High-efficiencyparticulate-air- Filter). Dieser hat die Aufgabe möglichst feine Partikel zurückzuhalten, welche die Abscheidevorrichtung durchlaufen haben.
Herkömmliche Feinabscheidevorrichtungen sind ökologisch bedenklich, insbesondere wenn die Abluft in den Wohn- oder Arbeitsraum zurückströmt, da in der Feinabscheidevorrichtung, d.h. in den zurückgehaltenen Rückständen Verkeimungen stattfinden und diese Keime und Schimmelpilze mit der Abluft ausgeblasen werden. Wird mit einem Wasserbad als Abscheidevorrichtung gearbeitet ist diese Gefahr besonders groß, da die nicht zu vermeidende Anfeuchtung der Rückstände den Vorgang begünstigt. Durch die nötige möglichst kleine Filterfeinheit der Feinabscbeidevorrichtung und der erwähnten Problematik muss diese öfters gewechselt werden, um auch die ohnehin damit verbundenen Druckverluste nicht noch mehr durch die Rückstände zu erhöhen. Dies bedeutet hohe Betriebskosten. Hohe Druckverluste bewirken eine Verminderung der Saugleistung.
Deshalb sind derzeit einige Systeme, insbesondere die mit Wasserbad, ohne Feinabscheidevorrichtung ausgestattet. Viel kleine lungengängige Partikel werden dann nicht zurückgehalten. Verschmutzung des Gebläselaufrads, eventuell dessen Antriebmotors und der Raumluft sind die Folgen. Dies führt auch zum Systemausfall und erfordert einen wiederkehrenden Service.

**Aufgabe** der Erfindung ist es, diese Nachteile zu vermeiden. Es soll besonders für kleine Partikelchen eine Feinabscheidevorrichtung, vorwiegend zwischen Abscheidevorrichtung und Gebläselaufrad, mit verbesserter Filterwirkung geschaffen werden, welche selbstreinigend ist, d.h. nicht gewartet werden muss, eine geringe konstante Druckdifferenz benötigt und in welcher keine Verkeimung stattfinden kann.

**Lösung** der Aufgabe: Überwiegend an, vor und weniger nach der Ansaugfläche des Gebläselaufrads wird, als verbesserte Feinabscheidevorrichtung, ein unwuchtfreier rotierender Rotationsfilter mit einer von außen nach innen durchströmten Filterfläche angebracht. Die gefilterte Luft fliest axial in das oder vom Gebläselaufrad.
Die Filterfläche ist beispielsweise ein beschichtetes Siebgewebe aus Kunststoff, Textil oder Metall mit definierter Maschenweite, oder jegliche Filterart mit einer wirksamen Filterfeinheit. Die Beschichtung ist schmutz- und wasserabweisend, z.B eine Nanobeschichtung oder mit Lotuseffekt. Der Effekt der Selbstreinigung kann auch durch die Oberfläche vom Material der Filterfläche selbst bewirkt werden. Die Filterfeinheit kann gröber sein als entsprechend die gewünschte noch zurückgehaltene kleinste Partikelgröße, da auch entsprechend der Filterfeinheit kleinere Partikel abgeschleudert werden, wenn die Umfangsgeschwindigkeit des Rotationsfilters größer als die Luftgeschwindigkeit durch die Filterfläche ist. Je höher die Umfangsgeschwindigkeit des Rotationsfilters ist, umso gröber kann die Filterfeinheit sein und umso geringer wird die Druckdifferenz an demselben.
Ist die Abscheidevorrichtung vor dem Rotationsfi lter ein Wasserbad, werden kaum Wassertröpfchen durch den Rotationsfilter gelangen und der vom Rotationsfilter abgewiesene Schmutz kann nicht verkeimen, da er in das Wasserbad zurückgeführt wird, welches so wieso ständig erneuert wird. Die Filterfläche wird automatisch immer sauber, ohne Verschmutzung und trocken gehalten.

### Ausführungsbeispiele:

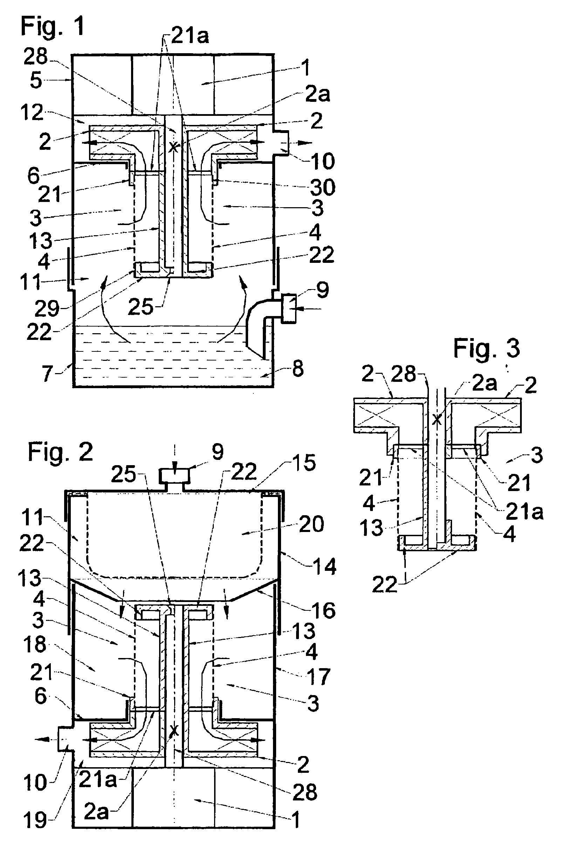

**Fig. 1:** Das vom Motor 1 angetriebene Gebläselaufrad (2) saugt Luft über den rotierenden Rotationsfilter 3 von außen nach innen der am Außenumfang angebrachten beschichteten Filterfläche 4, so dass in der Vorkammer 11, die durch die Trennwand 6 des Oberteils 5 und dem Unterteil 7 gebildet wird, ein Unterdruck entsteht. Dadurch wird über den Saugstutzen 9 Schmutzluft durch das im Unterteil 7 befindliche Wasserbad 8 gesaugt. Zwischen dem Innendurchmesser der Trennwand 6 und dem Außendurchmesser vom Gebläselaufrad 2 im Ansaugbereich (bzw. von der Auslaßscheibe 21) ist ein Dichtspalt oder eine Dichtung angebracht. Das Wasserbad 8 dient als Abscheidevorrichtung zur Reinigung der Luft Im Reinraum 12, oberhalb der Trennwand 6 im Oberteil 5, entsteht ein Überdruck, so dass die gereinigte Luft über den Abluftstutzen 10 entweichen kann. Die vom Rotationsfilter 3 zurückgehaltenen abgeschleuderten Partikel landen im Wasserbad 8.
   Der auf der linken Seite abgebildete kompakte lösbare Rotationsfilter 3 besteht aus den zusammengefügten Teilen: Auslaßscheibe 21 mit Öffnungen 21a für den Luftaustritt und den Boden 22. Beide verbunden mit dem Rohrstück 13. Diese 3 Teile (13+21+22) können auch als ein Teil z.B aus Kunststoff gespritzt sein. An der Auslaßscheibe 21 und dem Boden 22 ist am äußerem Außenumfang 29 oder Innenumfang 30, bzw. dazwischen, die Filterfläche 4 befestigt. Die Befestigung kann durch Schweißen, Kleben, in Kunststoff einspritzen oder durch Kraft oder Formschluss, radial mit einem innen- bzw. Außenring, axial mit einer Axialscheibe erfolgen. An die Filterfläche 4 kann am Innen- oder Außenumfang ein zusätzlicher luftdurchlässiger Stützkörper zur Unterstützung der Filterfläche 4 angebracht sein.
   Bei einer weiteren Ausgestaltung ist zwischen der Auslaßscheibe 21 und dem Boden 22 mindestens eine nicht dargestellte am Rohrstück 13 befestigte Stützscheibe für die Filterfläche 4 angebracht, die wahlweise mit der Filterfläche 4 verbunden sein kann.
   Die für den Rotationsfilter 3 erforderliche Druckdifferenz ist am kleinsten und die Filterwirkung am besten, wenn der umfassende Innendurchmesser der Filterfläche 4 nicht oder wenig größer als der umfassenden Außendurchmesser der Öffnungen 21a ist.
   Die axiale und radiale Befestigung 2a des Gebläselaufrads 2 auf der Antriebswelle 28 kann ein Kraft oder Formschluss, z.B. durch Kleben, Einpressen oder mit einem Gewinde sein.
   Die Befestigung des kompakten Rotationsfilters 3 erfolgt mit der Schraube 25, welche die Anlagefläche der Auslaßscheibe 21 auf das Gebläselaufrad 2 im Zuflussbereich presst und abdichtet.
   Der auf der rechten Seite abgebildete Rotationsfilter 3 ist unlösbar mit all seinen Teilen mit dem Gebläselaufrad 2 fest verbunden und benötigt keine zusätzliche Befestigung.
**Fig. 2:** Infolge der vom Motor 1 über die Antriebwelle 28 auf das Gebläselaufrad 2 mit der Befestigung 2a übertragenen Rotation wird über den Saugstutzen 9 im Deckel 15 Schmutzluft angesaugt. Diese strömt durch den Filterbeutel 20 (Abscheidevorrichtung), die Vorkammer 11, die innere Öffnung des Zwischenbodens 16 des Oberteils 14, von außen nach innen durch den Rotationsfilter 3 (Feinabscheidevorrichtung), das Gebläselaufrad 2, in die Reinkammer 19 unterhalb der Trennwand 6 im Unterteil 17 und durch den Abluftstutzen 10 nach außen.
   Der vom Rotationsfilter 3 zurückgehaltene Schmutz sammelt sich in der Abscheidekammer 18.
   Die auf der rechten und linken Seite unterschiedlich dargestellte Rotationsfilter 3 entsprechen der Fig. 1. Die Vorrichtung ist auch funktionsfähig, wenn die Darstellung Fig.2 auf den Kopf steht.
**Fig. 3:** Auf der linken Seite abgebildet besteht der kompakte lösbare Rotationsfilter 3 aus den zusammengefügten Teilen: Auslaßscheibe 21 mit Öffnungen 21a für den Luftaustritt und den Boden 22, beide verbunden mit dem Rohrstück 13. Die 3 Teile können auch als ein Teil z.B aus Kunststoff gespritzt sein. Die Filterfläche 4 ist entsprechend Fig. 1 befestigt.
   Der kompakte lösbare Rotationsfilter 3 wird zur Befestigung auf die Antriebswelle 28 aufgeschoben und die Auslaßscheibe 21, kraft- oder formschlüssig (Schrauben, Gewinde, Schnapp- oder Klemmverschluss usw.), mit dem Gebläselaufrad 2 dichtend radial und axial verbunden.
   Auf der rechten Seite fehlt gegenüber der linken Seite bei dem lösbaren Rotationsfilter 3 das Rohrstück 13, welches die Auslaßscheibe 21 mit dem Boden 22 verbindet. Wird die Auslaßscheibe 21 wie auf der linken Seite mit dem Gebläselaufrad 2 verbunden, so wird damit der Boden 22 an der Antriebswelle 28 radial und axial fixiert und die Filterfläche 4 axial gespannt. Die Verspannung kann mit einem axial wirkenden nicht dargestellten Federelement in der Wirkung verbessert werden und Toleranzen ausgleichen.
   Die Filterfläche 4 kann bei der linken und rechten Ausführung auch die äußere Stirnseite des Bodens 22 mit umfassen, welcher dann an der Stirnseite Öffnungen haben muss, durch welche Luft in das Innere des Rotationsfilters 3 strömen kann.
   Eine weitere Ausgestaltung ist gegeben, wenn der Außendurchmesser der Filterfläche 4 am Boden 22 kleiner ist als der an der Auslaßscheibe 21.

### Verwendete Ziffern:

- 1.: Motor
- 2.: Gebläselaufrad
- 2a: Befestigung
- 3.: Rotationsfilter
- 4.: Filterfläche
- 5.: Oberteil
- 6.: Trennwand
- 7.: Unterteil
- 8.: Wasserbad
- 9.: Saugstutzen
- 10.: Abluftstutzen
- 11.: Vorkammer
- 12.: Reinkammer
- 13.: Rohrstück
- 14.: Oberteil
- 15.: Deckel
- 16.: Zwischenboden
- 17.: Unterteil
- 18.: Abscheidekammer
- 19.: Reinkammer
- 20.: Filterbeutel
- 21.: Auslaßscheibe
- 21a: Öffnung
- 22.: Boden
- 23.: Stirnplatte
- 24.: Scheibe
- 25.: Schraube
- 26.: Platte
- 27.: Ringscheibe
- 28.: Antriebwelle
- 29.: äußerer Außenumfang
- 30.: äußerer Innenumfang

## Patentansprüche

1. Vorrichtung mit welcher Luft zur Reinigung der Raumluft oder von Oberflächen mittels eines Gebläselaufrads (2) durch eine Abscheidevorrichtung, wie Wasserbad (8), Filterbeutel (20) oder Zyklon und einer zusätzlichen Feinabscheidevorrichtung angesaugt wird, wobei der Schmutz (Staub), auch geförderte Teilchen aller Art aus verschiedenen Stoffen von der wieder nach außen abgegebenen Luft getrennt und zur Entsorgung zurückgehalten werden, **gekennzeichnet**, dass auf oder vor (weniger nach) der Ansaugfläche des Gebläselaufrads (2) als Feinabscheidevorrichtung für sehr kleine Partikel ein unwuchtfreier rotierender Rotationsfilter (3) angebracht ist und die Luft durch dessen Filterfläche (4) in Form eines Zylinders, Kegels, Kegelstumpfes, Kugelabschnitts, Pyramide, Pyramidenstumpf verschiedener Grundflächen und oder Scheibe ist und von außen nach innen und axial in das Gebläselaufrad (2) strömt und an Filterfläche (4) zurückgehaltene Partikel durch die Zentrifugalkraft zur Entsorgung von der Filterfläche (4) abschleudert werden.

2. Vorrichtung gemäß Anspruch 1, **dadurch gekennzeichnet, dass** die Filterfläche (4) eine Beschichtung erhält, z.B eine Nanobeschichtung oder mit Lotuseffekt, bzw. aus einem Material besteht wodurch ebenfalls die Oberfläche schmutz- und wasserabweisend wird.

3. Vorrichtung gemäß Anspruch 1 und 2, **dadurch gekennzeichnet, dass** die Umfangsgeschwindigkeit des Rotationsfilters (3) möglichst größer ist als die Luftgeschwindigkeit durch die Filterfläche (4) des Rotationsfilters (3), um die effektive Filterwirkung gegenüber der entsprechenden Filterfeinheit (Maschenweite) zu erhöhen.

4. Vorrichtung gemäß Anspruch 1 bis 3, **dadurch gekennzeichnet, dass** ein kompakter, lösbarer und anwuchtfreier Rotationsfilter (3) im wesentlichen bestehend aus der Auslaßscheibe (21) mit Öffnungen (21a) durch welche die Luft in das Gebläselaufrad (2) fließt, dem Boden (22) und das die beiden (21, 22) verbindende und zur Antriebswelle (28) zentrische Rohrstück (13), sowie der Filterfläche (4), welche an der Auslaßscheibe (21) und dem Boden (22) am äußerem Außenumfang (29) oder äußerem Innenumfang (30), bzw. dazwischen befestigt ist, wobei die Befestigung durch Schweißen, Kleben, in Kunststoff einspritzen oder durch Kraft oder Formschluss radial mit einem Innen- bzw. Außenring und axial mit einer Axialscheibe erfolgen, wobei alternativ ein zusätzlicher luftdurchlässiger Stützkörper an der Innen- oder Außenkontur der Filterfläche (4) vorgesehen ist, der auch den Boden (22) ersetzen kann, oder entsprechend wenigstens eine zur Antriebswelle (28) radial und axial fixierte Stützscheibe zwischen Auslaßscheibe (21) und Boden (22), an der außen die Filterfläche (3) anliegt bzw. befestigt ist.

5. Vorrichtung gemäß Anspruch 4, **dadurch gekennzeichnet, dass** der kompakte lösbare Rotationsfilter (3) zur Antriebswelle (28) zentriert und mit mindestens einer axialen Schraube (25) befestigt wird, die vorzugsweise an der Stirnseite der Antriebswelle (28) oder dem Gebläselaufrad (2) zentrisch eingeschraubt ist und über den Boden (22), sowie das Rohrstück (13) die Auslaßscheibe (21) gegen das Gebläselaufrad (2) an die Luft Eingangsseite dichtend anpresst.

6. Vorrichtung gemäß Ansprüche 4, **dadurch gekennzeichnet, dass** der kompakte lösbare Rotationsfilter (3) auf eine zur Antriebswelle (28) zentrischen Aufnahme zur Befestigung aufgeschobene wird und die Auslaßscheibe (21) direkt kraft- oder formschlüssig (z.B. mit Schrauben, Gewinde, Schnapp- oder Klemmverschluss) mit dem Gebläselaufrad 2 dichtend, radial und axial fest fixiert wird.

7. Vorrichtung gemäß Anspruch 1 bis 3, **dadurch gekennzeichnet, dass** der lösbare Rotationsfilter (3) im wesentlichen aus der Auslaßscheibe (21) mit Öffnungen (21a) durch welche die Luft in das dort anliegende Gebläselaufrad (2) fließt, dem Boden (22), sowie der Filterfläche (4), welche an der Auslaßscheibe (21) und dem Boden (22) im äußerem Umfangsbereichbereich (29, 30) befestigt ist, wobei die zentrische Befestigung des Rotationsfilters (3) durch kraft- oder formschlüssiges Verbinden (Schrauben, Gewinde, Schnapp- oder Klemmverschluss usw.) der Auslaßscheibe (21 ), direkt mit dem Gebläselaufrad (2) erfolgt und sich hierbei der Boden (22) zentrierend und axial so abstützt, dass **dadurch** die Filterfläche (4) axial gespannt wird, alternativ mit einem zusätzlichen axial wirkenden Federelement.

8. Vorrichtung gemäß obiger Ansprüche, **dadurch gekennzeichnet, dass** der Rotationsfilter (3) zusammen mit dem Gebläselaufrad (2) eine nicht lösbare Einheit bildet.

9. Vorrichtung gemäß obiger Ansprüche, **dadurch gekennzeichnet, dass** der umfassende Innendurchmesser der Filterfläche (4) möglichst nicht viel größer als der umfassende Außendurchmesser der axialen Öffnungen (21a) in der Auslaßscheibe (21) ist.

## Geänderte Patentansprüche

### Geänderte Patentansprüche gemäss Regel 86(2) EPÜ.

**1.** Vorrichtung mit welcher Luft zur Reinigung der Raumluft oder von Oberflächen mittels eines Gebläselauftads (2) durch eine Abscheidevorrichtung, wie Wasserbad (8), Filterbeutel (20) oder Zyklon und einer zusätzlichen Feinabscheidevorrichtung angesaugt wird, bestehend aus einem mit dem Gebläselaufrad (2) rotierenden Rotationsfilter (3) für sehr kleine Partikel, wobei der Schmutz, Wassertröpfchen, auch geförderte Teilchen aller Art aus verschiedenen Stoffen von der wieder nach außen abgegebenen Luft getrennt und zur Entsorgung zurückgehalten werden, **gekennzeichnet**, dass der unwuchtfreie rotierende Rotationsfilter (3), angebracht auf oder vor (weniger nach) der Ansaugfläche des Gebläselaufrads (2), bei dem die Luft von außen nach innen durch dessen Filterfläche (4) ohne Tiefenwirkung, d.h. ein Gewebe oder Siebgeflecht mit dünnen Fäden aus Kunststoff oder Metall, in Form eines Zylinders, Kegels, Kegelstumpfes, Kugelabschnitts, Pyramide, Pyramidenstumpf verschiedener Grundflächen und oder einer zur Achse senkrechter Scheibe, axial zum Gebläselaufrad (2) strömt und die an der äußeren Filterfläche (4) zurückgehaltenen Partikel durch die Zentrifugalkraft zur Entsorgung von der Filterfläche (4) abschleudert werden und nicht teilweise innerhalb des Filterbereichs hängen bleiben, wie bei Filterbereichen mit Tiefenwirkung (Öffnungen mit radialer oder axialer Tiefe, filzartiger Aufbau etc.), wobei der umfassende Durchmesser der innen liegenden Filterfläche (4) nicht oder nur geringfügig größer als der umfassende Außendurchmesser der axialen Öffnungen (21a) in der Auslaßscheibe (21) ist, sowie der Kanal zum und der axialen Ansaugfläche vom Gebläselaufrad (2), damit ein Festsetzen von Teilchen kleiner der Maschenweite innerhalb der Filterfläche (4) infolge der Zentrifugalkraft weitgehend vermieden werden und diese dann durch die axiale Luftströmung aus dem Rotationsfilter (3) und den Kanal zum Gebläselaufrad zur Selbstreinigung getragen werden und keine dem Gebläselaufrad (2) entgegen gesetzte und den Wirkungsgrad verringernde Pumpwirkung entstehen.

**2.** Vorrichtung gemäß Anspruch 1, **dadurch gekennzeichnet, dass** die Filterfläche (4) eine Beschichtung erhält, z.B eine Nanobeschichtung oder mit Lotuseffekt, bzw. aus einem Material besteht wodurch ebenfalls die Oberfläche schmutz- und wasserabweisend wird.

**3.** Vorrichtung gemäß Anspruch 1 und 2, **dadurch gekennzeichnet, dass** die Umfangsgeschwindigkeit des Rotationsfilters (3) möglichst größer ist als die Luftgeschwindigkeit durch die Filterfläche (4) des Rotationsfilters (3), um die effektive Filterwirkung gegenüber der entsprechenden Filterfeinheit (Maschenweite) zu erhöhen.

**4.** Vorrichtung gemäß Anspruch 1 bis 3, **dadurch gekennzeichnet, dass** ein kompakter, lösbarer und anwuchtfreier Rotationsfilter (3) im wesentlichen bestehend aus der Auslaßscheibe (21) mit Öffnungen (21a) durch welche die Luft in das Gebläselaufrad (2) fließt, dem Boden (22) und das die beiden (21,22) verbindende und zur Antriebswelle (28) zentrische Rohrstück (13), sowie der Filterfläche (4), welche an der Auslaßscheibe (21) und dem Boden (22) am äußerem Außenumfang (29) oder äußerem Innenumfang (30), bzw. dazwischen befestigt ist, wobei die Befestigung durch Schweißen, Kleben, in Kunststoff einspritzen oder durch Kraft oder Formschluss radial mit einem Innen- bzw. Außenring und axial mit einer Axialscheibe erfolgen, wobei alternativ ein zusätzlicher luftdurchlässiger Stützkörper an der Innen- oder Außenkontur der Filterfläche (4) vorgesehen ist, der auch den Boden (22) ersetzen kann, oder entsprechend wenigstens eine zur Antriebswelle (28) radial und axial fixierte Stützscheibe zwischen Auslaßscheibe (21) und Boden (22), an der außen die Filterfläche (3) anliegt bzw. befestigt ist.

**5.** Vorrichtung gemäß Anspruch 4, **dadurch gekennzeichnet, dass** der kompakte lösbare Rotationsfilter (3) zur Antriebswelle (28) zentriert und mit mindestens einer axialen Schraube (25) befestigt wird, die vorzugsweise an der Stirnseite der Antriebswelle (28) oder dem Gebläselaufrad (2) zentrisch eingeschraubt ist und über den Boden (22), sowie das Rohrstück (13) die Auslaßscheibe (21) gegen das Gebläselaufrad (2) an die Luft Eingangsseite dichtend anpresst.

**6.** Vorrichtung gemäß Ansprüche 4, **dadurch gekennzeichnet, dass** der kompakte lösbare Rotationsfilter (3) auf eine zur Antriebswelle (28) zentrischen Aufnahme zur Befestigung aufgeschobene wird und die Auslaßscheibe (21) direkt kraft- oder formschlüssig (z.B. mit Schrauben, Gewinde, Schnapp- oder Klemmverschluss) mit dem Gebläselaufrad 2 dichtend, radial und axial fest fixiert wird.

**7.** Vorrichtung gemäß Anspruch 1 bis 3, **dadurch gekennzeichnet, dass** der lösbare Rotationsfilter (3) im wesentlichen aus der Auslaßscheibe (21) mit Öffnungen (21a) durch welche die Luft in das dort anliegende Gebläselaufrad (2) fließt, dem Boden (22), sowie der Filterfläche (4), welche an der Auslaßscheibe (21) und dem Boden (22) im äußerem Umfangsbereichbereich (29, 30) befestigt ist, wobei die zentrische Befestigung des Rotationsfilters (3) durch kraft- oder formschlüssiges Verbinden (Schrauben, Gewinde, Schnapp- oder Klemmverschluss usw.) der Auslaßscheibe (21), direkt mit dem Gebläselaufrad (2) erfolgt und sich hierbei der Boden (22) zentrierend und axial so abstützt, dass **dadurch** die Filterfläche (4) axial gespannt wird, alternativ mit einem zusätzlichen axial wirkenden Federelement.

**8.** Vorrichtung gemäß obiger Ansprüche, **dadurch gekennzeichnet, dass** der Rotationsfilter (3) zusammen mit dem Gebläselaufrad (2) eine nicht lösbare Einheit bildet.
